Europäisches Patentamt

European Patent Office

Office européen des brevets

(11) Publication number: **0 508 892 A2**

# EUROPEAN PATENT APPLICATION

(21) Application number: **92400984.8**

(22) Date of filing: **08.04.92**

(51) Int. Cl.5: **B41J 2/525**

(30) Priority: **08.04.91 KR 559391**

(43) Date of publication of application:
**14.10.92 Bulletin 92/42**

(84) Designated Contracting States:
**DE FR GB NL**

(71) Applicant: **GOLDSTAR CO. LTD.**
**20, Yoido-Dong Yongdungpo-Ku**
**Seoul(KR)**

(72) Inventor: **Huh, Byung Mu**
**300-11, Dongbuichon-Dong,**
**angkung Apt. 4-409 Yongsan-Ku(KR)**

(74) Representative: **Jacquelin, Marc-Henri**
**Cabinet PLASSERAUD 84, rue d'Amsterdam**
**F-75009 Paris(FR)**

(54) **Exposure system for color video printer.**

(57) An exposure system for use in a color video printer which comprises light emitting diode arrays each for generating red, green and blue light signals, a drive circuit for applying drive signals to the light emitting diode arrays, a base roller disposed at the running path of a cycolor film for functioning as a base surface of the cycolor film, and micro lens arrays disposed between the base roller and the light emitting diode arrays for focusing the lights from the light emitting diode arrays on the cycolor film. By use of the light emitting diode arrays as an exposing light source, the whole structure and manufacturing cost of a color video printer can be simple and reduced.

EP 0 508 892 A2

## BACKGROUND OF THE INVENTION

### 1. Field of the Invention

The present invention relates to an exposure system for use in a color video printer, and more particularly to an exposure system for use in a cycolor type color video printer which is capable of reducing the manufacturing cost of a printer by use of light emitting diodes(LED) as an exposing light source.

### 2. Description of the Prior Arts

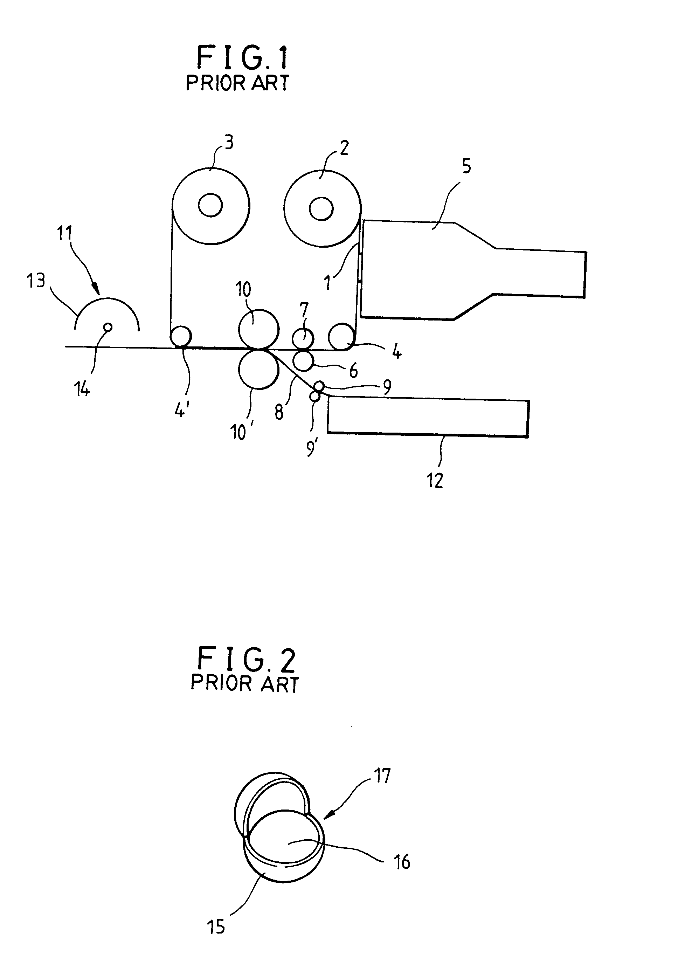

Various types of exposure systems for use in a cycolor type color video printer are well known in the art. One conventional color video printer is illustrated in Fig. 1. As shown in Fig. 1, the conventional color video printer comprises a supply roller 2 for supplying a cycolor film 1, a take-up roller 3 for winding up the cycolor film 1, a plurality of guide rollers 4 and 4' for guiding the cycolor film 1, a fiber optics cathode ray tube (FOCRT) 5 for exposing the cycolor film 1 which is drawn out of the supply roller 2, a capstan roller 6 and a pinch roller 7 for transferring the cycolor film 1, feeding rollers 9 and 9' for transferring receiver papers 8 to the running path of the cycolor film 1, upper and lower developing rollers 10 and 10' for applying a predetermined pressure to the cycolor film 1 which has been exposed by the FOCRT 5 and to the receiver paper 8 so that picture images of the cycolor film 1 can be developed on the receiver paper 8, and a heat-fixing unit 11 for fixing the picture images to the receiver paper 8. In Fig. 1, reference numeral 12 denotes a receiver paper cassette, 13 is a reflective mirror, and 14 is a heater.

Such a conventional color video printer operates as follows.

The cycolor film 1 which is fed from the supply roller 2 is transferred at a predetermined speed by the rotation of the capstan roller 6 and guided by the guide rollers 4 and 4' and then wound-up on the take-up roller 3. At this moment, an exposing procedure is executed to the cycolor film 1 at an outlet side of the supply roller 2 by the FOCRT 5 which is spaced apart from the cycolor film 1.

At the same time, upon driving the feeding rollers 9 and 9' the receiver paper 8 is transferred to the running path of the cycolor film 1 so that the receiver paper 8 passes through the upper and lower developing rollers 10 and 10' together with the cycolor film 1, thereby transcribing the picture images of the cycolor film 1 to the receiver paper 8. That is, a developing procedure is carried out.

The exposing precedure and the developing procedure will now be described in detail.

On the surface of the cycolor film 1, several millions of cyliths particles of 2 $\mu$m to to 12 $\mu$m in diameter are doped in which leuco dye 16 is filled in a light sensitive micro capsules 15. As for the cyliths particles, there are three types, i.e., a cyan leuco dye, a magenta leuco dye, and a yellow leuco dye.

The cyan leuco dye is subject to hardening when it is exposed to a red light. The magenta leuco dye is subject to hardening when it is exposed to a green light. While, the yellow leuco dye is subject to hardening when it is exposed to a blue light. Thus, since the cyliths particles 17 which have not been exposed to a light are not hardened, they are broken out so that the leuco dye 16 flows out from the micro capsule 15 when a predetermined pressure is applied thereto. Also, the hardening condition of the cyliths particle 17 depends upon the amount of light.

In the exposing procedure, when a red light is emitted from the FOCRT 5, only the cyan leuco dye is hardend and other leuco dyes, i.e., magenta leuco dye and yellow leuco dye are not hardened. Under this circumstance, when the cyliths particle 17 is subject to a certain pressure by the upper and lower developing rollers 10 and 10', the magenta and yellow leuco dyes are flown out from the micro capsules 15 so that a red color is presented. Similarly, when a green light is emitted from the FOCRT 5, the magenta leuco dye is hardened and the cyan and yellow leuco dyes are flown out from the micro capsules 15, thereby presenting a green color.

In such an exposing procedure, since the light is dependent upon the wavelength, it is ideal that an exposing light source for the cycolor film 1 has a wavelength similar to that of cyliths particle.

The picture images of the cycolor film 1 which have been exposed in the exposing procedure are transcribed on the receiver paper 8 by the upper and lower developing rollers 10 and 10' in the developing procedure. Thereafter, the receiver paper 8 is transferred to a heat-fixing unit 11 so that the picture images are heat-fixed on the receiver paper 8 by the heat from the heater 14.

However, in such a cycolor-type color video printer, since the fiber optics cathode ray tube is used for an exposing unit, the whole structure of the printer is complicate and the manufacturing cost is relatively high.

## SUMMARY OF THE INVENTION

It is, therefore, an object of the present invention to provide an exposure system for use in a color video printer which uses light emitting diodes which have a light distribution characteristic similar to that of cyliths particles as a light source, thereby reducing the size of color video printer and the manufacturing cost.

Other objects and further scope of applicability of the present invention will become apparent from the detailed description given hereinafter. It should be understood, however, that the detailed description and specific examples, while indicating preferred embodiments of the invention, are given by way of illustration only, since various changes and modifications within the spirit and scope of the invention will become apparent to those skilled in the art from this detailed description.

In accordance with the present invention, the color video printer comprises film supplying and take-up units for supplying and taking up a cycolor film, an exposing unit for exposing the cycolor film, a paper supplying unit for supplying receiver papers, a developing unit for developing a picture image of the cycolor film on the receiver paper, and a heat-fixing unit for fixing the picture image which has been developed on the receiver paper.

The present invention relates, especially, to an exposing unit comprising light sources each for generating red, green and blue lights, respectively, focusing members for focusing the light from the light sources to a cycolor film, and a transferring memeber for transferring the exposed film at a predetermined speed.

The exposing unit of the present invention comprises light emitting diode (LED) arrays each for generating red, green and blue lights, respectively, a drive circuit for applying drive signals to the LED arrays, a base roller disposed at the running path of the cycolor film for transferring the cycolor film and functioning as a base surface in the exposing procedure, and micro lens arrays disposed between the LED arrays and the base roller for focusing the light from the LED arrays to the cycolor film.

## BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Fig. 1 is an elevational front view showing a construction of a conventional cycolor-type color video printer;

Fig. 2 is a perspective view showing a cylith particle which is generally used in the conventional cycolor-type color video printer;

Fig. 3 is a graph showing the light-distribution characteristic of a light emitting diode which is utilized in the present invention;

Fig. 4 is a graph showing the light-distribution characteristic of a cylith particle;

Fig. 5 is a perspective view of a cycolor film which is applied to the color video printer of the present invention;

Fig. 6 is a schematic view showing the construction of the color video printer having an exposure system of the present invention;

Fig. 7 is an enlarged view showing a transferring unit of the exposure system of the present invention; and

Fig. 8 is a perspective view showing the whole structure of the exposure system of the present invention.

## DESCRIPTION OF THE PREFERRED EMBODIMENTS

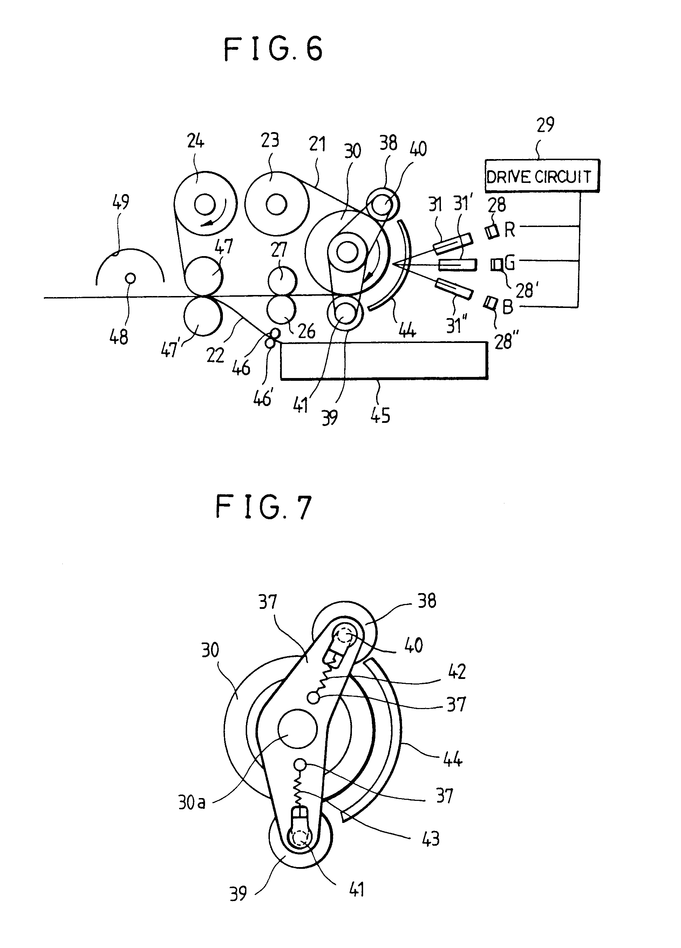

Referring now in detail to the drawings for the purpose of illustrating preferred embodiments of the present invention, the exposure system for use in a color video printer as shown in Figs. 6 to 8, comprises a supplying and take-up unit for supplying and taking up a cycolor film 21, an exposing unit for exposing the cycolor film 21, a paper feeding unit for feeding a receiver paper 22, a developing unit for applying a predetermined pressure to the cycolor film 21 which has been exposed by the exposing unit and the receiver paper 22 and developing a picture image of the cycolor film 21 on the receiver paper 22, and a heat-fixing unit for fixing the picture image which has been developed on the receiver paper 22.

The supplying and take-up unit includes a supply roller 23 for supplying the cycolor film 21, a take-up roller 24 for taking up the developed cycolor film 21, and a capstan roller 26 and a pinch roller 27 for transferring the cycolor film 21.

The exposing unit includes LED arrays 28, 28' and 28'' each for generating red, green and blue light, respectively, a drive circuit 29 for applying a drive signal to the LED arrays 28, 28' and 28'', a base roller 30 disposed at the running path of the cycolor film 21 for functioning as a base surface of the cycolor film 21 in the exposing procedure, and micro lens arrays 31, 31' and 31'' disposed between the LED arrays 28, 28' and 28'' and the base roller 30 for focusing the light from the LED arrays 28, 28' and 28'' to the cycolor film 21.

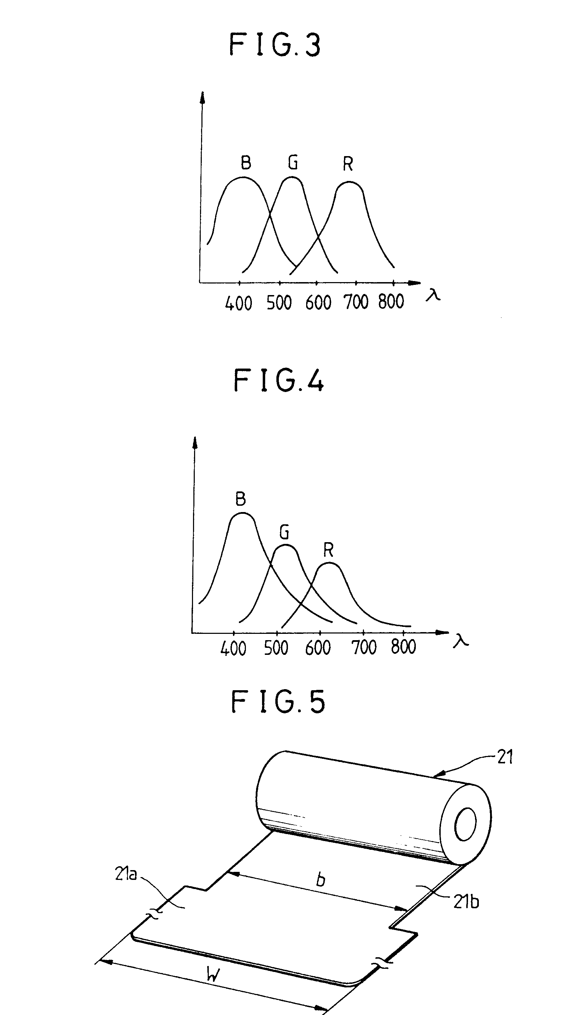

The light emitting diode which is utilized as a light source in the present invention has the light-distribution characteristic as shown in Fig. 3. The light-distribution characteristic of the light emitting diode is similar to that of the cyliths particle as shown in Fig. 4. Thus, it can be used as an ideal light source of the exposure system by adjusting the wavelengths of red, green and blue lights through a compensating method such as a gamma-compensation.

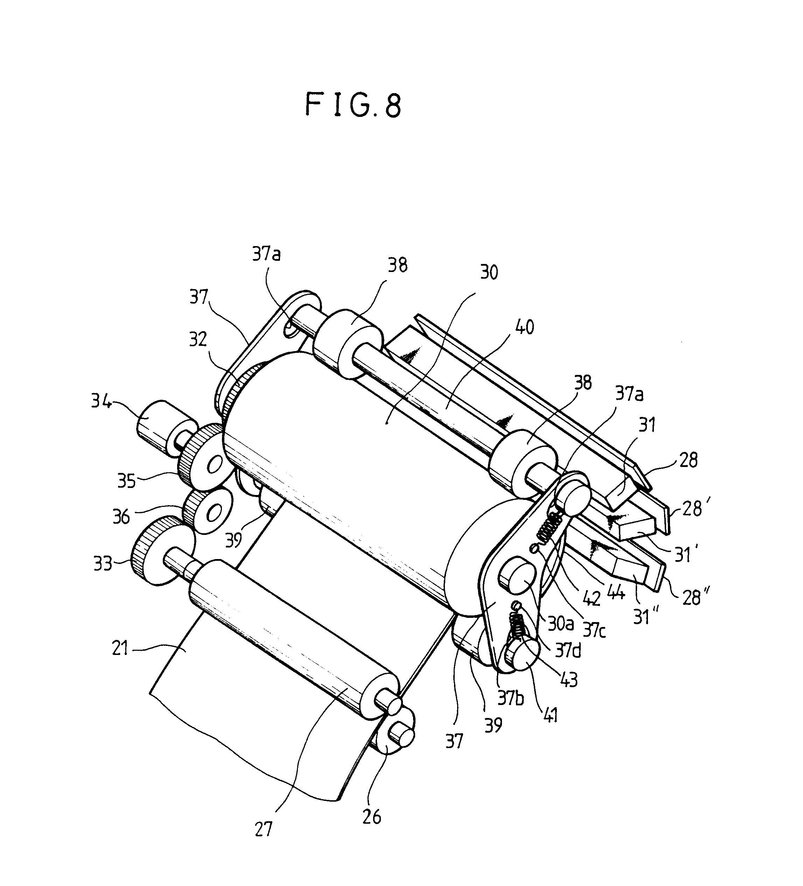

Referring to Fig. 8, driven gears 32 and 33 are coaxially mounted at the base roller 30 and the pinch roller 27 and the driven gear 32 of the base roller 30 is meshed with a drive gear 35 of a drive motor 34. Between the drive gear 35 and the driven gear 32 of the pinch roller 27, an idle gear 36 is engaged therewith so that the base roller 30 and the pinch roller 27 rotate in same direction by the driving force of the drive motor 34. In the above arrangements, it is preferable to rotate the pinch roller 27 slightly faster than the base roller 30 so that the cycolor film 21 receives a predetermined tension force during its running.

Meanwhile, at both side shafts 30a (only one shaft shown) of the base roller 30, support plates 37 are fixed, respectively. Each of the support plates 37 is provided at both ends thereof with guide slots 37a and 37b through which guide shafts 40 and 41 of upper and lower guide rollers 38 and 39 are rotatably inserted. The upper and lower guide rollers 38 and 39 are in contact with the base roller 30. The guide shafts 40 and 41 are biased toward the shaft 30a of the base roller 30 by means of coil springs 42 and 43, respectively, one end of which is fixed to one support plate 37 and the other end of which is fixed to the guide shaft 40 or 41.

In addition, at the circumferential portions of the base roller 30, a pair of arcuate sheet guiders 44 are provided with a predetermined gap so that the cycolor film 21 which has passed through the upper guide rollers 38 may be guided to the lower guide rollers 39.

The paper feeding unit includes a paper cassette 45 for containing receiver papers 22 therein, and feed rollers 46 and 46' for guiding the receiver papers 22 from the paper cassette 45 to the running path of the cycolor film 21.

The developing unit includes an upper and a lower developing rollers 47 and 47' for applying a predetermined pressure to the cycolor film 21 which has been exposed and the receiver paper 22 and developing a picture image of the cycolor film 21 on the receiver paper 22.

The heat-fixing unit includes a heater 48 for applying a heat to the receiver paper 22, and a reflective mirror 49 for reflecting the heat from the heater 48 toward the receiver paper 22.

On the other hand, the cycolor film 21 which is utilized in the exposure system of the present invention is provided at the front edge thereof with an initial guide portion 21a whose width (W) is larger than the width (b) of the film portion 21b to enable an initial setting of the film to be made easier.

The cycolor-type color video printer of the present invention operates as follows :

First, in the initial film setting procedure, when drive motor 34 is driven under the condition that the initial guide portion 21a of the cycolor film 21 which is wound on the supply roller 23 is inserted between the base roller 30 and the upper guide rollers 38, the drive motor 35 rotates in anticlockwise so that the base roller 30 is rotated in clockwise because the drive gear 35 of the drive motor 34 is in meshed with the driven gear 32 of the base roller 30.

At this moment, since the circumferential edge portions of the initial guide portion 21a of the cycolor film is engaged between the base roller 30 and the upper guide rollers 38, the initial guide portion 21a moves upon the guidance of the upper guide rollers 38 and then engaged between the base roller 30 and the lower guide rollers 39 upon the guidance of the sheet guiders 44 provided below the upper guide rollers 38. At that moment, the driving force of the drive motor 34 is transmitted to the idle gear 36 so that the pinch roller 27 is rotated in the same direction as the base roller 30. By these operations, the running path of the cycolor film 21 is formed.

In such an initial setting operation of the cycolor film 21, since the upper and lower guide rollers 38 and 39 are resiliently supported by coil springs 42 and 43 with their guide shafts 40 and 41, the film setting operation can smoothly be carried out. In such an operation, the film portion 21b of the cycolor film 21 is not subject to any restriction by the guide rollers 38 and 39 and the sheet guiders 44.

Upon completion of the setting operation of the cycolor film 21, when an image information is transmitted for the printing operation, the image information is applied to the LED arrays 28, 28' and 23'' as R.G.B. image signals by the drive circuit 29. Then, the LED arrays 28, 28' and 28'' generate red, green and blue lights containing the image signals, respectively, and the lights from the LED arrays 28, 28' and 28'' are focused by the micro lens arrays 31, 31' and 31'' and then irradiated to the film portion 21b of the cycolor film 21 which is wound around the base roller 30, so that the image information is exposed to the cycolor film 21.

When the cycolor film 21 which has been exposed to the image information is transferred to its running path, the receiver paper 22 is also transferred to the running path by the rotation of the feeding rollers 46 and 46'. Thereafter, the cycolor film 21 and the receiver paper 22 pass together through the developing rollers 47 and 47' which are in contact with each other at a predetermined pressure so that the picture image of the cycolor film 21 is transcribed to the receiver paper 22.

Upon the completion of the developing procedure as above, the cycolor film 21 is transferred to and wound around the take-up roller 24 and the receiver paper 22 is transferred to the heat-fixing unit so that the transcribed picture image is heat-fixed to the receiver paper 22 by the heat from the heater 48.

As described above in detail, the present invention provides the effect that it is possible to provide an exposure system for use in a color video printer which is simple in structure and inexpensive in mancfacturing cost by use of light emitting diodes as a light source instead of the conventional fiber optics cathode ray tube.

The invention being thus described, it will be obvious that the same may be varied in many ways. Such variations are not to be regarded as a departure from the spirit and scope of the invention, and all such modifications as would be obvious to one skilled in the art are intended to be included in the scope of the following claims.

## Claims

1. An exposure system for a color video printer comprising :
   means for exposing a cycolor film by generating red, green and blue color light signals ;
   means for focusing a light from said exposing means on said cycolor film ; and
   means for transferring the exposed cycolor film at a predetermined speed.

2. The system of claim 1, wherein said exposing means comprises a plurality of light emitting diode arrays each for emitting red, green and blue color light, respectively.

3. The system of claim 1, wherein said focusing means comprises a plurality of micro lens arrays each for focusing and irradiating the lights from the exposing means, respectively, to the cycolor film.

4. The system of claim 1, wherein said transferring means comprises:
   a base roller for transferring the cycolor film at a predetermined speed upon driving of a drive motor ;
   a plurality of guide rollers for guiding the cycolor film by rotating together with said base roller ;
   biasing means for resiliently supporting said guide rollers toward the base roller ; and
   a pair of supporting plates provided at both side ends of the base roller for supporting a shaft of each pair of the guide rollers.

5. The system of claim 4, wherein arcuate sheet guiders are provided between said guide rollers.

# F I G.1
## PRIOR ART

# F I G.2
## PRIOR ART

# FIG.3

# FIG.4

# FIG.5

# FIG. 6

# FIG. 7

# FIG.8